# EUROPÄISCHE PATENTANMELDUNG

(11) **EP 2 169 286 A2**
(43) Veröffentlichungstag der Anmeldung: **31.03.2010**
(21) Anmeldenummer: 09010197.3
(22) Anmeldetag: 07.08.2009
(51) Int. Cl.: F16K 5/06

(54) **Kugelhahn mit Sensor**

(30) Priorität: 27.09.2008 DE 202008012913 U
(71) Anmelder: PAW GmbH & Co. KG, 31789 Hameln (DE)
(72) Erfinder: Vehmeier, Jörg, 32791 Lage (DE)
(74) Vertreter: Jabbusch, Matthias

(57) **Zusammenfassung**

Bei einer als Kugelhahn ausgebildeten Absperrvorrichtung zum Einsetzen in eine Leitung für Medien, umfassend ein in den Verlauf der Leitung einsetzbares Gehäuse (1), in dem eine Absperrkugel (2) drehbar aufgenommen ist und das einen Drehantrieb (4) für die Absperrkugel (2) trägt, ist vorgesehen, dass die Absperrkugel (2) in einem dem Drehantrieb (4) zugekehrten Bereich einen Durchbruch hat und sich ausgehend von dem Drehantrieb (4) eine Kammer (6) für die Aufnahme eines Sensors durch den Durchbruch hindurch in das Innere der Kugel erstreckt, dass der Drehantrieb (4) mit dem Gehäuse (1) lösbar verbunden ist und der Sensor in der Kammer (6) vergossen ist.

## Beschreibung

Die Erfindung betrifft eine als Kugelhahn ausgebildete Absperrvorrichtung zum Einsetzen in eine Leitung für Medien, umfassend ein in den Verlauf der Leitung einsetzbares Gehäuse, in dem eine Absperrkugel drehbar aufgenommen ist und das einen Drehantrieb für die Absperrkugel trägt.

Als Kugelhahn ausgebildete Absperrvorrichtungen sind als einfache Verschließmechanismen für Leitungen bekannt. Sie werden mit ihrem Gehäuse in den Verlauf einer Leitung eingesetzt. Im Gehäuse ist eine durchbohrte Absperrkugel aufgenommen, welche durch ein Verdrehen um etwa 90° einen Leitungsquerschnitt freigibt oder den Leitungsquerschnitt verschließt. Medien in der Leitung können Gase, Flüssigkeiten oder auch schüttfähige feste Stoffe sein.

In vielen Prozessen ist es erforderlich, über physikalische Eigenschaften der in einer Leitung befindlichen Medien Auskunft zu erhalten, beispielsweise über die Temperatur oder über Druckverhältnisse. Daher wurde bereits vorgeschlagen, im Bereich des Gehäuses eines Kugelhahns einen Sensor anzuordnen. Bei einer bekannten Absperrvorrichtung wurde dazu auf einer dem Drehantrieb gegenüberliegenden Seite des Gehäuses ein Durchbruch in das Gehäuse eingebracht, durch den hindurch ein Sensor in das Innere des Gehäuses vorstehen kann. Auch wenn auf diese Weise eine z.B. Temperaturmessung erfolgen kann, ist durch die zusätzliche Ausrüstung des Gehäuses mit einem weiteren Durchbruch ein weiterer Arbeitsgang bei der Fertigung des Gehäuses erforderlich. Zudem wird durch diesen weiteren Durchbruch eine potentielle Undichtigkeitsstelle geschaffen.

Der Erfindung liegt die Aufgabe zugrunde, eine Absperrvorrichtung der eingangs genannten Gattung aufzuzeigen, welche sich durch einen einfachen apparativen Aufbau auszeichnet und welche auf einfache Weise einen Sensor integriert.

Diese Aufgabe ist erfindungsgemäß dadurch gelöst, dass die Absperrkugel in einem dem Drehantrieb zugekehrten Bereich einen Durchbruch hat und sich ausgehend von dem Drehantrieb eine Kammer für die Aufnahme eines Sensors durch den Durchbruch hindurch in das Innere der Absperrkugel erstreckt, dass der Drehantrieb mit dem Gehäuse lösbar verbunden ist und der Sensor in der Kammer vergossen ist.

Bei der erfindungsgemäßen Absperrvorrichtung ist ein weiterer Durchbruch zur Anordnung eines Sensors nicht erforderlich. Der Sensor wird ausgehend von dem Drehantrieb in das Innere der Absperrkugel geführt, der für den Drehantrieb ohnehin vorhandene Durchbruch im Gehäuse des Kugelhahns wird also auch für den Sensor verwendet. Zur Anordnung des Sensors im Inneren der Absperrkugel ist der Durchbruch in der Wandung der Absperrkugel vorhanden, durch den die Kammer vorsteht. Der Sensor wird in der Kammer angeordnet, nämlich in dem in das Innere der Absperrkugel vorstehenden Bereich und in dieser Kammer vergossen. Durch das Vergießen wird der Sensor fest angeordnet, der Sensor kann dabei auch einen Abschnitt der Kammeraußenwand ausbilden. Der Drehantrieb wird mit seiner Kammer zu einem messmedien-berührenden Sensorgehäuse. Aufgrund der Eigenschaft, dass der Drehantrieb mit dem Gehäuse lösbar verbunden ist, ist zudem ein Wechseln des Drehantriebes möglich.

Nach einer ersten Weiterbildung der Erfindung ist vorgesehen, dass der Drehantrieb als Hohlspindel ausgebildet ist und dass sich der Hohlraum der Spindel bis in die Kammer erstreckt. Hohlspindel und Kammer sind vorzugsweise einstückig ausgebildet, sie haben einen gemeinsamen Hohlraum. In diesem Hohlraum kann der Sensor angeordnet werden. Wird die Hohlspindel aus der Absperrvorrichtung entnommen, erfolgt auch ein Entnehmen der Kammer mit dem Sensor. Auf einfache Weise können somit verschiedene Sensoren in ein und denselben Kugelhahn eingebracht werden.

Die Kammer ist vorzugsweise als Hohlprofil ausgebildet, sie kann dabei eine Stiftform haben. Wenn sie in der Drehachse des Kugelhahns angeordnet ist, ist die Drehung des Kugelhahns nicht durch die Kammer behindert.

Der Sensor ist beispielsweise ein Temperatursensor. In der in das Innere der Absperrkugel vorstehenden Kammer ist er dem Medium, das durch die Leitung geführt wird, weit angenähert. Der Sensor kann auch ein Drucksensor sein, dann ist in der Wandung der Kammer zumindest ein Durchbruch vorzusehen, damit das zu messende Medium auch auf den Drucksensor einwirken kann.

Die Hohlspindel ist mit Dichtungen in das Gehäuse der Absperrvorrichtung eingesetzt. Gesichert sein kann sie mit einer Überwurfmutter, nach Lösen dieser kann die Hohlspindel in einfacher Weise aus dem Gehäuse der Absperrvorrichtung herausgezogen werden. Der Sensor ist dadurch wechselbar, ohne das Rohrleitungsnetz abzulassen. Wenn der Kugelhahn abgesperrt ist, ist zwar der Hohlraum der Kugel noch mit dem Medium gefüllt, darüber hinaus jedoch abgedichtet. Nach dem Lösen der Spindel-Überwurfmutter entweicht nur das im Kugelhahn enthaltene Medium beim Herausziehen der Spindel, darüber hinaus ist die Leitung abgedichtet.

Für den Sensor kann eine Anschlussleitung bis zum Sensor geführt sein und im Inneren der Kammer mit vergossen sein. Es können aber auch im Bereich der Hohlspindel Steckanschlüsse für elektrische Leitungen vorgesehen sein.

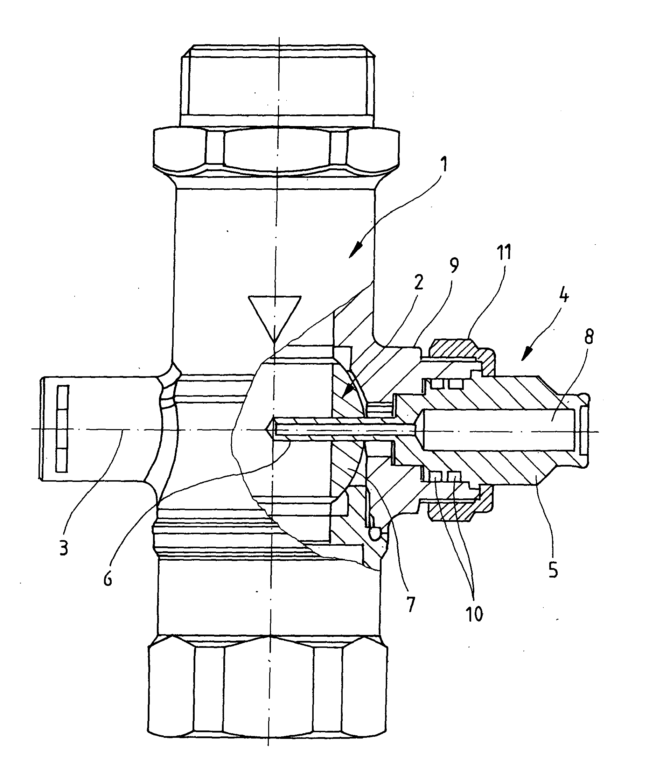

In der einzigen Figur der Zeichnung ist ein Ausführungsbeispiel der erfindungsgemäßen Absperrvorrichtung in einer teilweise geschnittenen Seitenansicht gezeigt.

Die Absperrvorrichtung ist als Kugelhahn ausgebildet, sie weist ein Gehäuse 1 auf. Das Gehäuse 1 kann in den Verlauf einer Leitung für Medien eingesetzt werden. Im Inneren des Gehäuses 1 ist eine durchbohrte Absperrkugel 2 angeordnet, welche um eine Achse 3 drehbar ist.

Der Absperrkugel 2 ist ein Drehantrieb 4 zugeordnet. Der Drehantrieb 4 ist als Hohlspindel 5 ausgebildet, die Hohlspindel 5 weist mit der Absperrkugel 2 drehfest verbundene Bauteile auf, welche eine Antriebskraft zum Drehen der Absperrkugel 2 auf diese übertragen können.

Ausgehend von der Hohlspindel 5 ist eine Kammer 6 in das Innere der Absperrkugel 2 geführt. In der dem Drehantrieb 4 zugekehrten Wandung 7 der Absperrkugel 2 ist ein Durchbruch angeordnet, durch den die Kammer 6 in das Innere der Absperrkugel 2 hindurch vorsteht. Die Kammer 6 ist als Hohlprofil ausgebildet, sie weist eine Stiftform auf. Im Inneren der Kammer 6 sowie im Inneren der Hohlspindel 5 ist ein Hohlraum 8 angeordnet, der zur Anordnung eines nicht dargestellten Sensors ausgenutzt werden kann. Der Sensor wird ausgehend von der Hohlspindel 5 bis in die Kammer 6 geführt und dort vergossen.

Die Hohlspindel 5 ist aus einem Sockel 9 des Gehäuses 1 entnehmbar. Sie ist über Dichtringe 10 im Sockel 9 aufgenommen und mit einer Überwurfmutter 11 fixiert. Nach Lösen der Überwurfmutter 11 ist die Hohlspindel 5 mit der Kammer 6 aus dem Sockel 9 des Gehäuses 1 herausziehbar und gegen eine andere Hohlspindel 5 mit gegebenenfalls einem anderen Sensor austauschbar.

Auf der der Hohlspindel 5 gegenüberliegenden Seite ist im Gehäuse 1 kein Durchbruch vorzusehen.

## Patentansprüche

1. Als Kugelhahn ausgebildete Absperrvorrichtung zum Einsetzen in eine Leitung für Medien, umfassend ein in den Verlauf der Leitung einsetzbares Gehäuse, in dem eine Absperrkugel drehbar aufgenommen ist und das einen Drehantrieb für die Absperrkugel trägt,
**dadurch gekennzeichnet,**
**dass** die Absperrkugel (2) in einem dem Drehantrieb (4) zugekehrten Bereich einen Durchbruch hat und sich ausgehend von dem Drehantrieb (4) eine Kammer (6) für die Aufnahme eines Sensors durch den Durchbruch hindurch in das Innere der Kugel (2) erstreckt, dass der Drehantrieb (4) mit dem Gehäuse (1) lösbar verbunden ist und der Sensor in der Kammer (6) vergossen ist.

2. Absperrvorrichtung nach Anspruch 1, **dadurch gekennzeichnet, dass** der Drehantrieb (4) als Hohlspindel (5) ausgebildet ist und dass sich der Hohlraum (8) der Spindel (5) bis in die Kammer (6) erstreckt.

3. Absperrvorrichtung nach Anspruch 1 oder 2, **dadurch gekennzeichnet, dass** die Kammer (6) als Hohlprofil ausgebildet ist.

4. Absperrvorrichtung nach einem der vorhergehenden Ansprüche, **dadurch gekennzeichnet, dass** der Sensor ein Temperatursensor ist.

5. Absperrvorrichtung nach einem der Ansprüche 1 bis 3, **dadurch gekennzeichnet, dass** in der Wandung der Kammer (6) zumindest ein Durchbruch angeordnet ist und dass der Sensor ein Drucksensor ist.
